# EUROPEAN PATENT APPLICATION

(11) **EP 1 988 424 A1**
(43) Date of publication of application: **05.11.2008**
(21) Application number: 08153833.2
(22) Date of filing: 31.03.2008
(51) Int. Cl.: G02F 1/167

(54) **Apparatus with parallel wires and method for monitoring of electrophoretic ink particle motion**

(30) Priority: 30.04.2007 US 742182
(71) Applicant: Xerox Corporation, Rochester, New York 14644 (US)
(72) Inventor: Chopra, Naveen, Oakville, Ontario L6H 6S7 (CA); Daniel, Jürgen H., San Francisco, CA 94141 (US); Lavigne, Gaetano J., Oakville, Ontario L6M 3H1 (CA); Kazmaier, Peter M., Mississauga, Ontario L5L 1E5 (CA)
(74) Representative: Grünecker, Kinkeldey, Stockmair & Schwanhäusser Anwaltssozietät

(57) **Abstract**

A parallel wire apparatus allows direct lateral viewing of particles of electrophoretic ink that are undergoing electrophoretic migration. Electrophoretic ink movement is commonly monitored by placing the ink through the top electrode, but as the toner particles migrate back and forth between the two electrodes, the viewer can not see what lies beneath the top electrode. This may hide commonly known failure modes, such as particle agglomeration, swishing of particles due to hydrodynamic effects. The parallel wire apparatus (500) includes two narrow gauge wires glued to a glass substrate and held apart in parallel at a fixed distance to help maintain a uniform electric field across the gap. A plastic block (600) with pegs that are situated at a fixed distance and threaded screws is used to make the lateral wire apparatus with precise wire spacing that may be reproducibly made in less than five minutes using inexpensive and readily available materials.

## Description

### BACKGROUND

The exemplary embodiments generally relate to materials and materials manufacturing for xerographic machines, such as printers and copiers, and specifically relate to electrophoretic ink and electrophoretic migration.

Electrophoretic ink particle movement is commonly monitored by placing ink between two electrodes with observation of the ink through the top electrode (typically an indium-tin-oxide (ITO) coated glass plate). However, one cannot see what lies beneath the top electrode, once the top plate is covered with a layer of particles. This inability to see beneath the top electrode may hide commonly known failure modes for electrophoretic ink, such as particle agglomeration, swishing of particles due to hydrodynamic effects, charge reversal and continuation of particle movement following the reversal of the electrode polarity.

### SUMMARY

Exemplary embodiments having many aspects include a lateral wire apparatus that allows direct lateral viewing particles of electrophoretic ink that are undergoing electrophoretic migration. Electrophoretic ink movement is commonly monitored by viewing the ink through the top electrode, but as the toner particles migrate back and forth between the two electrodes, the viewer can not see what lies beneath the top electrode. This may hide commonly known failure modes, such as particle agglomeration, swishing of particles due to hydrodynamic effects. The lateral wire apparatus includes two wires glued to a substrate and held apart at a fixed distance to help maintain a uniform electric field across the gap between the wires. A block with screws and pegs placed at fixed distances is used to make the lateral wire apparatus with fairly precise wire spacing that may be reproduced quickly using inexpensive and readily available materials.

One aspect is a lateral wire apparatus for observing electrophoretic ink. The lateral wire apparatus includes two wires adhered to a substrate so that the wires are substantially parallel. A gap is formed between the wires for receiving electrophoretic ink. A power supply may be attached to the wires. A substantially uniform electric field may be created in the gap between the wires. The lateral wire apparatus may be used to detect particle agglomeration and hydrodynamic effects.
The distance between the wires may be between about 30-60 µm.

Another aspect is a tool for making a lateral wire apparatus for observing electrophoretic ink. The tool includes a block, two wires, and a number of fasteners. The fasteners are mounted on the block and the wires are wrapped around the fasteners. A substrate is placed under the wires and the wires are adhered to substrate so that the wires are substantially parallel, forming a gap between the wires for receiving electrophoretic ink. The tool may include one or more connectors between two or more fasteners for changing the width of the gap between the wires. The connector may include a hinge point around which the fasteners move or the connector may include a sliding structure for sliding the at least two fasteners. The tool may include an actuator for controlling the movement of the fasteners in relation to the connector so that the wires remain substantially parallel to each other during any change in the gap. The gap may be between about 30-60 µm in width. In a further embodiment the tool further comprises:
at least one connector between at least two of the fasteners for changing the width of the gap between the first wire and the second wire.
   In a further embodiment the connector includes a hinge point around which the at least two fasteners move. In a further embodiment the connector includes a sliding structure for sliding the at least two fasteners.
   In a further embodiment the tool further comprises:
   an actuator for controlling movement of the at least two fasteners in relation to the connector. In a further embodiment the first wire and the second wire remain substantially parallel to each other during any change in the gap.
      In a further embodiment the gap is between about 30-60 µm in width.

Yet another aspect is a method of making a lateral wire apparatus for observing electrophoretic ink. Two wires are wrapped around a number of fasteners, which are mounted on a block. A substrate is placed under the two wires. Then, the wires are adhered to the substrate so that the wires are substantially parallel, the wires defining a gap for receiving electrophoretic ink. Finally, the wire are cut to free the lateral wire apparatus, i.e., the wires adhered to the substrate, from the block. The lateral wire apparatus may be used to detect particle agglomeration and hydrodynamic effects in the electrophoretic ink.

Yet another aspect is a method for using a lateral wire apparatus for observing ink. A drop of electrophoretic ink is disposed into the gap formed between two wires, which are adhered to a substrate so that the wires are substantially parallel. The lateral motion of particles of the electrophoretic ink undergoing electrophoretic migration is observed between the wires. The viewer observes the lateral motion from a point of view perpendicular to the plane created by the parallel wires. Particle agglomeration may be detectable in the electrophoretic ink.
In a further embodiment a viewer observes the lateral motion from a point of view perpendicular to the plane created by the first wire and the second wire.
In a further embodiment particle agglomeration is detectable in the electrophoretic ink. In a further embodiment hydrodynamic effects are detectable in the electrophoretic ink.

### BRIEF DESCRIPTION OF THE DRAWINGS

FIG. 1 illustrates a side view of an electrophoretic ink testing device in the related art;

FIG. 2 illustrates an electrophoretic ink particle in the related art;

FIG. 3 illustrates an exemplary electrophoretic display in the related art;

FIG. 4 illustrates another electrophoretic display in the related art;

FIG. 5 illustrates an exemplary embodiment of a lateral wire apparatus for testing electrophoretic ink;

FIGS. 6A and 6B illustrate a top view and perspective view respectively of an exemplary embodiment of a tool for preparing the lateral wire apparatus of FIG. 5;

FIGS. 7A-7D illustrate an exemplary embodiment of a method of preparing or assembling the lateral wire apparatus of FIG. 5 using the tool of FIGS. 6A and 6B;

FIGS. 8A and 8B illustrate an alternate exemplary embodiment of the tool of FIGS. 6A and 6B to make the lateral wire apparatus of FIG. 5;

FIG. 9A illustrates a side view of electrophoretic ink in the lateral wire apparatus of FIG. 5 showing convection or turbulence due to hydrodynamic effects; and

FIG. 9B illustrates a side view of electrophoretic ink in the lateral wire apparatus of FIG. 5 showing particle chain formation (agglomeration) convection currents.

### DETAILED DESCRIPTION OF EMBODIMENTS

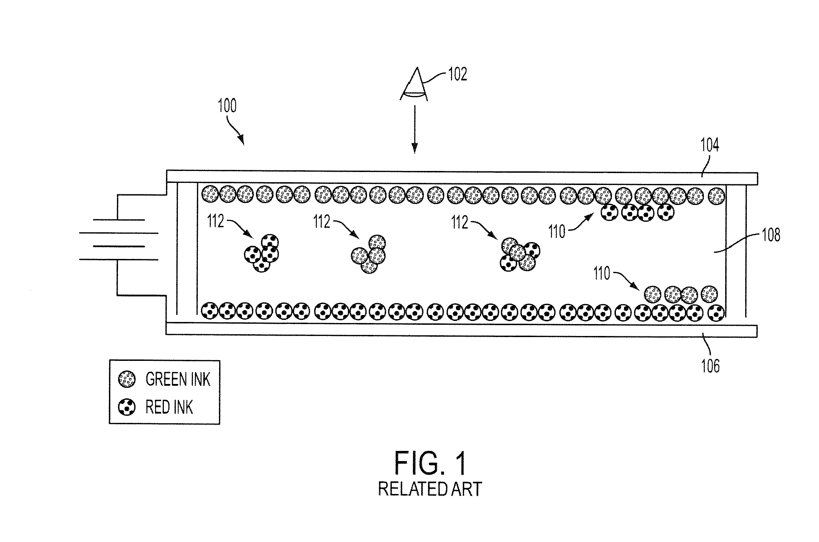

FIG. 1 illustrates some problems associated with an electrophoretic ink testing device 100 in the related art. A viewer 102 (as indicated by the eye and arrow showing the point of view in FIG. 1) is looking down on a top electrode 104 (e.g., an ITO glass electrode) of the electrophoretic ink testing device 100, which is shown in side view in FIG. 1. The electrophoretic ink testing device 100 includes the top electrode 104, a bottom electrode 106, a cavity holding fluid 108 and oppositely charged particles 110, shown as green and red ink in FIG. 1. The ink in this example is a two particle ink, i.e., there are two contrasting colored particles, green and red. Other inks may be black and white or various other colors. When a voltage is applied to the testing device 100, the particles switch or move from one electrode to the other. The movement of the electrophoretic ink particles under the influence of an electric field to create an image is called electrophoresis or electrophoretic migration. Many devices may incorporate electrophoretic ink, such as signs, electronic books, personal digital assistants, xerographic machines, such as printers and copiers and the like. An electronically addressable display device may incorporate electrophoretic ink. Such a display device may be bi-stable, meaning that an image persists on the device once power is turned off.

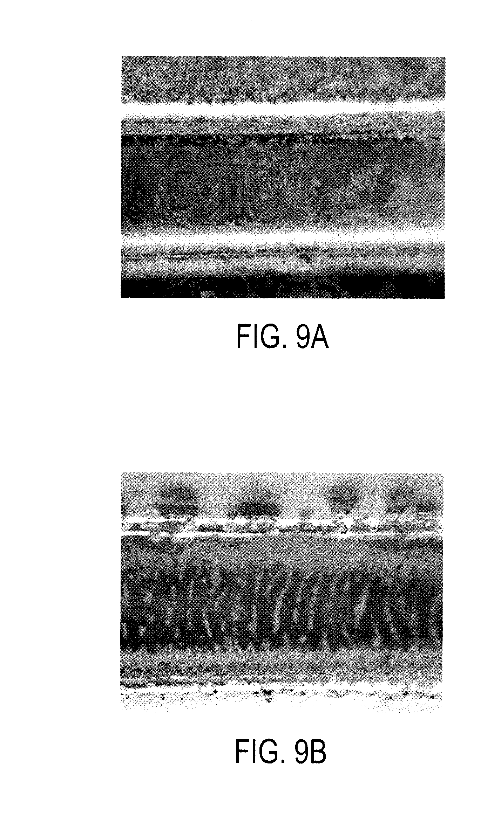

In FIG. 1, there is a fairly uniform layer of green ink along the top electrode 104 and a fairly uniform layer of red ink along the bottom electrode 106. The viewer 102 is not able to see the agglomerates 112 (or clusters of particles) because they are hidden under the layer of green ink along the top electrode 104. Instead, the viewer 102 would only see green. In addition, the viewer 102 is not able to see the oppositely charged particles 110 under the green layer along the top ITO glass electrode 104. In summary, the viewer 102 cannot see what lies beneath the top electrode 104, once the top electrode 104 is covered with a layer of particles. This inability to see beneath the top electrode 104 in ink testing devices 100 in the related art may hide commonly known failure modes for electrophoretic ink, such as particle agglomeration 112, swishing of particles due to hydrodynamic effects (see, e.g., FIG. 9A), charge reversal and continuation of particle movement several seconds after the reversal of the electrode polarity, among other characteristics of electrophoretic ink. The ink switches as charged particles move in opposite directions when polarity is reversed. If these problems are undetected, the ink in a device may initially switch adequately for the first few cycles, but the device may eventually stop switching and the ink may become inoperable over time. This may happen, for example, if agglomerates compound themselves so particles continue to stick until there is no contrast and the device fails to switch.

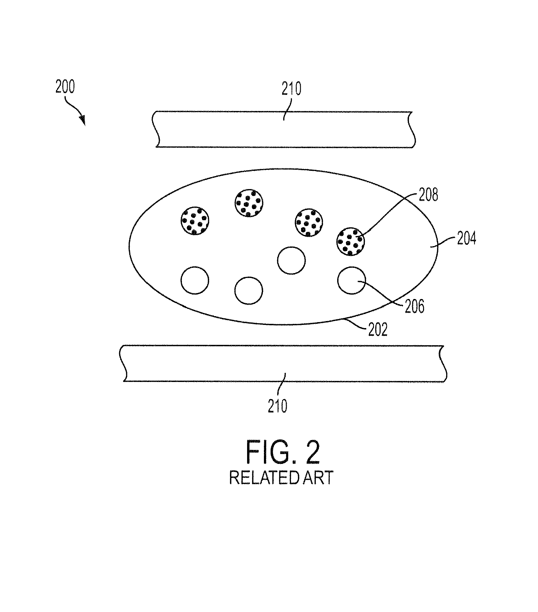

FIG. 2 illustrates an exemplary electrophoretic ink particle in the related art. This particle is an electrophoretic ink capsule 200 that includes a shell 202, a non-polar liquid 204, and two sets of triboelectrically charged particles 206, 208. The ink capsule 200 may have an electrical conductivity of about 10⁻¹¹ Scm⁻¹ or less and a diameter of about 200 µm or less. The shell 202 encapsulates the non-polar liquid 204 and the particles 206, 208. The non-polar liquid may be a petroleum liquid. The first set of triboelectrically charged particles 206 may be light reflecting (i.e., light colored, such as white) while the second set of triboelectrically charged particles is light absorbing (i.e., dark colored, such as black). The ink capsule 200 may be embedded, for example, in a poly vinyl alcohol (PVA) layer. The PVA layer may be disposed on a substrate 210.

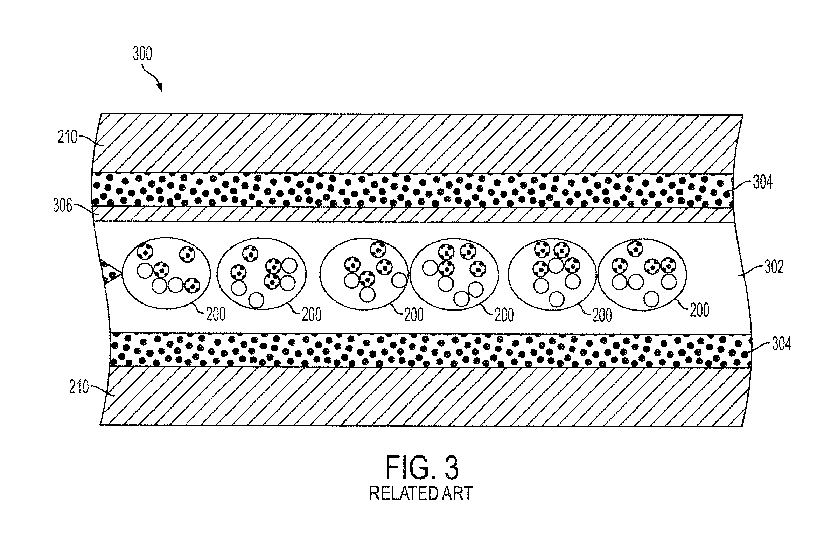

FIG. 3 illustrates an exemplary electrophoretic display 300 in the related art. The display 300 includes a number of ink capsules 200 embedded in a PVA layer 302. The PVA layer 302 is disposed between ITO layers 304. The ITO layers are disposed on substrates 210. One of the ITO layers may be bonded to one of the PVA layers by, for example, an adhesive layer, such as a layer of glue 306. The display 300 may have a switching field of about 2 volts/µm and a switching speed of about 15 to 20 Hertz.

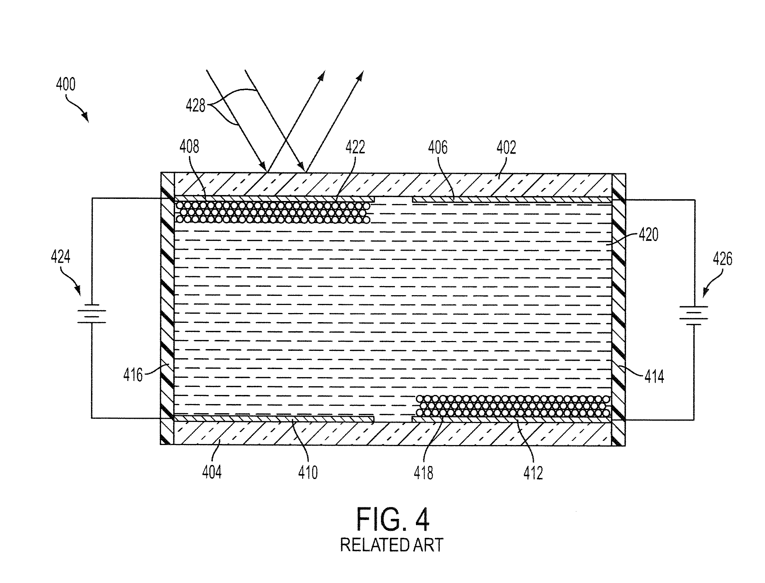

FIG. 4 illustrates another exemplary electrophoretic display 400 in the related art. The display 400 includes an electrophoretic cell forming a cavity. The cell includes a top 402 and a bottom 404 that are coated with areas of electrical conductivity to form electrodes 406, 408, 410, 412. The cavity is filled with an electrophoretic suspension layer including a colored suspending medium containing colloidal sized particles in an electrically insulating liquid and finely divided electrophoretic particles suspended in the suspending medium. A source of electrical potential is coupled to the electrodes and with an electric field applied, the marking particles form an image as they follow the field. The electrodes 406, 408, 410, 412 may be transparent on at least one side. The top 402 is used to view the image, so electrodes 406 and 408 as well as top 402 may be transparent. Side walls 414, 416 define a cavity between the electrodes 406, 408, 410, 412, providing a container into which may be placed electrophoretic particles 418. Also included in the cavity is a suspending medium or fluid 420 containing colloidal sized particles. The colloidal sized particles provide a color contrast with electrophoretic particles 422.

In operation, the related art display 400 of FIG. 4 is provided with an electrical potential from sources 424, 426, placing an electrical field across the cavity between the electrodes 406, 408, 410, 412. Particles 418 in this example are positively charged and electrophoretically driven to the negative electrode. The electrodes are addressable so as to create an image-wise pattern of an electrical field across the cavity thereby attracting particles 418 selectively. When viewed from the top 402 through transparent electrode 408, as shown by light rays 428, the electrophoretic particles are visible, but the electrophoretic particles 422 adhering to electrode cannot be seen because of the colloidal particles distributed in the suspending medium 420. The particles 422 adopt a charge with respect to the fluid 420 and a potential difference is set up. It is this charge that is acted upon by the applied electric field to produce the electrophoretic migration.

The performance of electrophoretic inks, such as the electrophoretic ink capsules 200 of FIG. 2, may be monitored in a display, such as the displays 300, 400 of FIGS. 3 and 4. The ink is placed between two electrodes and a voltage is applied to allow the particles to migrate back and forth. The particles are moving from the foreground to the background and usually, this is observed through a microscope. If there are two particle color sets, then the change in color may be observed under the microscope. However, related art displays 300, 400 fail to allow observation of what is going on underneath the surface layer particles. (See FIG. 1.) For example, any particles trapped beneath an initial front plane of particles would not be seen. To solve the problems associated with the electrophoretic ink testing device 100 of FIG. 1, exemplary embodiments provide a side (or lateral) view to allow observation of moving particles. In this way, it is possible to observe what is happening underneath the uppermost layer of particles closest to the electrodes, i.e., to observe a side view of ink performance.

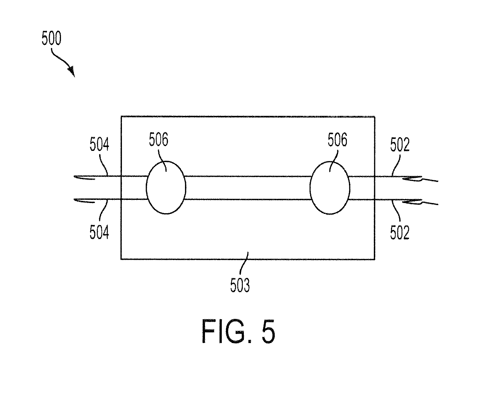

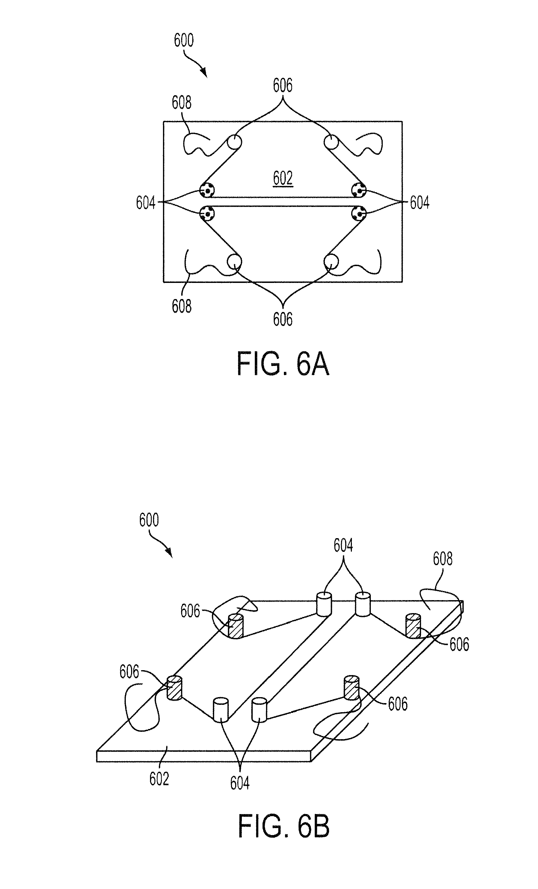

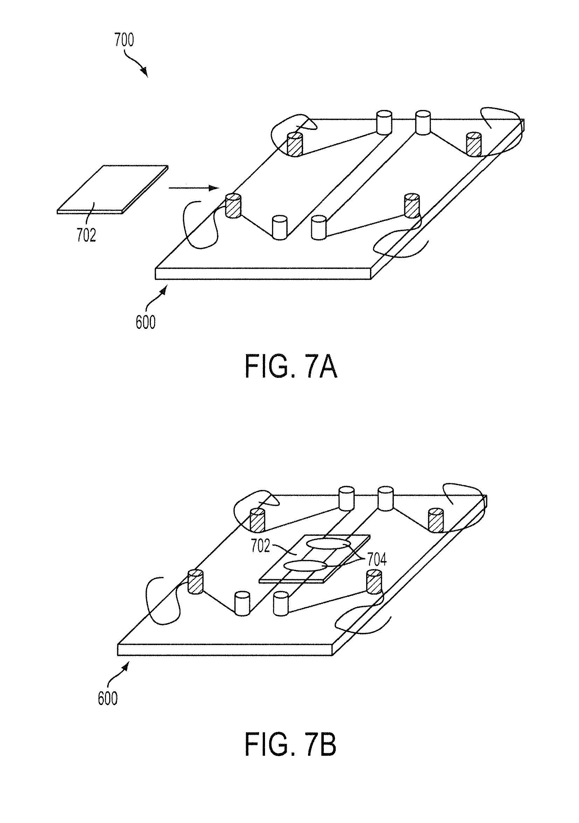

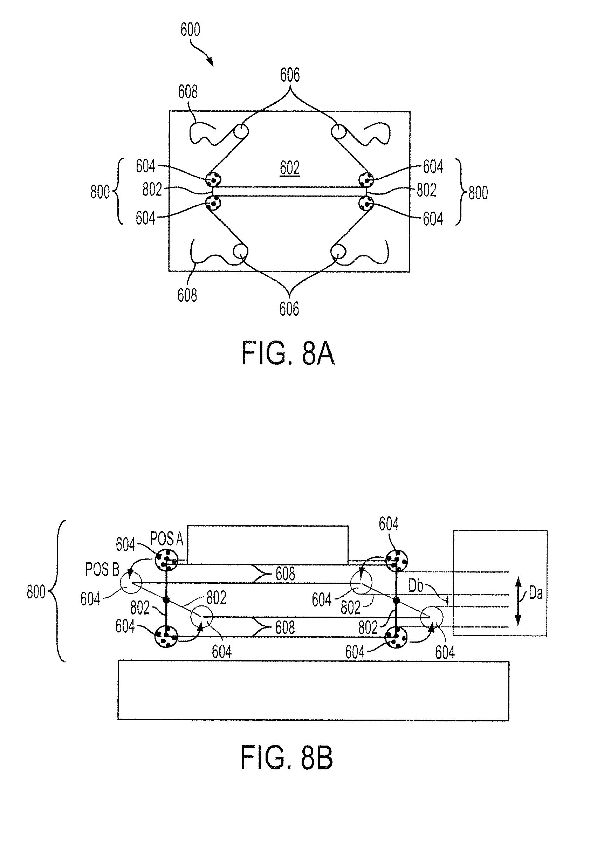

To fully understand the motion of electrophoretic ink particles, there is a need to view the particle movement in the plane lateral to the electrodes so as to see how the particles are moving in the underlying layers. Exemplary embodiments include a lateral wire apparatus (see FIG. 5) that allows direct lateral viewing of particles undergoing electrophoretic migration. One embodiment of the apparatus includes two narrow gauge wires spaced apart bonded at a fixed thickness to a glass substrate. Exemplary embodiments also include a tool (see FIGS. 6A and 6B) for inexpensively and reproducibly creating multiple lateral wire arrays for routine analysis of electrophoretic ink particles. Exemplary embodiments further include a method of creating the tool (see FIGS. 7A-7D, 8A and 8B).

FIG. 5 illustrates an exemplary embodiment of a lateral wire apparatus 500 for testing electrophoretic ink. In this example, the lateral wire apparatus 500 includes two wires 502 fixed to a substrate 503 and held apart at a fixed distance (or gap) 504. The substrate 503 may be glass, plastic or any other suitable material. The wires 502 may be two narrow gauge wires or any kind of wire suitable to define an appropriate gap 504. The wires 502 may be coated with various films, such as cytop, polycarbonate, fluropolymer, and polystyrene. Such surface coatings effect the charging for adhesion and may avoid irreversible adhesion of ink particles to an electrode surface. The wires may be fixed with glue 506, such as hot melt glue, adhesive material or epoxy. The fixed distance 504 between the wires 504 helps to maintain a substantially uniform electric field (i.e., electric field = voltage/thickness) across the gap 504. The gap 504 effects the voltage required to move the ink particles. For example, for a gap 504 of about 100 µm, about 100 volts may be applied for 100/100=1 volt per micron. Emulsion aggregation (EA) toner particles are typically 5-7 µm in diameter, so any gap 504 for electrophoretic ink would need to be larger than about 10 µm. Gap thickness 504 may vary between about 30-60 µm for electrophoretic ink. The gap 504 may have other thicknesses, depending on various characteristics of other ink particles to be tested. The point of view of the viewer of the lateral wire apparatus 500 is down on (i.e., perpendicular to) the substrate 503, allowing direct observation of the movement of ink particles between the wires 504.

FIGS. 6A and 6B illustrate a top view and perspective view respectively of an exemplary embodiment of a tool 600 for preparing the lateral wire apparatus 500 of FIG. 5. In this example, the tool 600 for making the lateral wire apparatus 500 is a block 602 with two pegs 604 (or pins) and four screws 606. The block 602 may be plastic, wood, metal, glass, plexiglass or any other suitable material. Although pegs 604 and screws 606 are shown in FIGS. 6A and 6B, any kind of fasteners may be used, such as bolts, couplings, nails, pins, and the like. The screws 606 may be threaded. The pegs 604 are situated at a fixed distance apart from one another, determining the wire spacing. The pegs 604 may be embedded in the block 602 or mounted in many ways, such as attaching, bolting, coupling, fixing, securing, or welding. Accurate peg 604 placement will ensure that the lateral wire apparatus 500 has wires 502 that are substantially parallel so that distance between the ends of the wires (i.e., the gap 504) is substantially the same at both ends of the wires 502. The screws 606 are used to lace the wire 608 between the pegs 604 and pull taut or tighten the wire 608, similar to a guitar string. To make the lateral wire apparatus 500, the wire 608 is strung around the screws 606 and wrapped around the pegs 604 as shown in FIG. 7A.

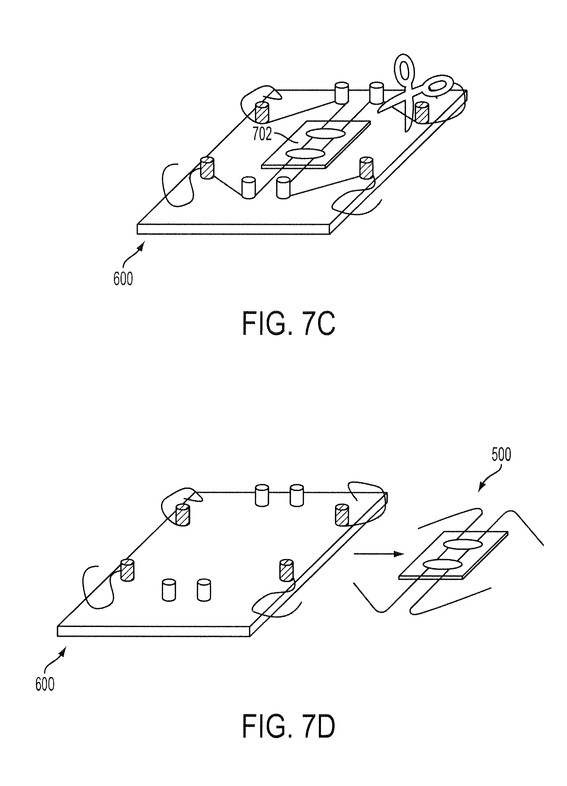

FIGS. 7A-7D illustrate an exemplary embodiment of a method 700 of preparing or assembling the lateral wire apparatus 500 of FIG. 5 using the tool 600 of FIGS. 6A and 6B. After the wire 608 is strung around the screws 606 and wrapped around the pegs 604 in FIG. 7A, a substrate or slide 702 is slipped under the wire 608. There may be enough spacing or give in the wire 608 so that the wire 608 may be lifted slightly to set the slide 702 in place. The wire 608 is pressed down onto the slide 702 and secured with a bead of glue 704 in FIG. 7B. After the glue 704 pools and hardens, the screws 606 may not be needed anymore. The slide 702 may be glass or plastic with an ITO coating. The glue 704 may be hotmelt glue or any kind of epoxy or adhesive. Once the glue 704 has set, the wires are cut at four points as shown in FIGS. 7C and 7D and the lateral wire apparatus 500 is ready to be used to test ink.

Using the tool 600, the lateral wire apparatus 500 may be made in less than about five minutes using inexpensive and readily available materials (e.g., wire, glass, and epoxy). By creating the lateral wire apparatus 500 with fairly precise wire spacing, the guesswork and variability between devices may be reduced to no more than 10 or 20%. When the gap changes, the electric field changes. Maintaining a consistent gap that is substantially the same on both ends of the lateral wire apparatus 500 and substantially the same across lateral wire apparatuses 500 made with the same tool 600, provides accurate testing and measurement of the performance and characteristics of a series of electrophoretic inks under substantially the same conditions.

The method 700 results in the lateral wire apparatus 500 of FIG. 5. A power supply may be attached to the lateral wire apparatus 500 to create a potential between the wires. To test an ink, a fine drop of ink (e.g., 200 micro liters of ink) may be dispensed by touching the wires with a delivery system, such as a pipette. Capillary forces attract that ink and wick it into the gap. The electrophoretic migration of the ink may then be observed under a microscope or other instrument. (See FIGS. 9A and 9B.)

The tool 600 provides a reproducible way of controlling the gap. For example, suppose one is measuring the performance of several electrophoretic inks with several lateral wire apparatuses 500. The tool 600 provides assurance that the next lateral wire apparatus 500 prepared with the tool 600 will be substantially the same as the last lateral wire apparatus 500 prepared with that tool 600. That is to say, the thickness between the two wires is controlled so that measurement is consistent across all the various inks and all the various lateral wire apparatuses 500 under test. The method of FIGS. 7A-7D provides a controlled means of making test fixture devices, i.e., lateral wire apparatuses 500.

FIGS. 8A and 8B illustrate an alternate exemplary embodiment of the tool 600 of FIGS. 6A and 6B to make the lateral wire apparatus 500 of FIG. 5. In this example, the tool 600 has the ability to rapidly change the distance of the wires using an optional feature 800 of one or more connectors 802 between pegs 604. The connector 802 may be any rigid body capable of connecting two or more pegs. For example, two connectors 802 may connect each pair of two pegs 604 as shown in FIG. 8A or three or four connectors 802 may connect the four pegs 604. In order to vary the distance of the wires 608, the pegs 604 may be attached to one or more hinge structures or sliding structures (not shown) which may be controlled by a micrometer actuator (not shown). For a hinge structure, there may be a hinge point in the center of the structure between the pegs 604 around which, the structure rotates or swivels.

In FIG. 8B, the distance between the wires 608 is changed from Da to Db (i.e., bringing the pegs 604 closer together in the vertical direction or moving from a north-south to northwest-southeast orientation) as the connector, hinge or slide is moved, moving the pegs 604 from position a to position b. In other words, moving counterclockwise from position a to position b changes the shape from a square (with each of the four pegs at its corners) to a parallelogram. The two pairs of pegs 604 may be rigidly connected by the optional connectors 802 in order to assure parallelism of the wires 608 to control or adjust the gap. By connecting pegs 604, any undesirable gradient in the wire distance may be avoided. For example, a gradient or difference in the gap between one end of the wires 608 and the other end of the wires 608 in the lateral wire apparatus 500 may be 50 µm when the gap at one end is 100 µm and the gap at the other end is 150 µm (i.e., 150-100=50). In this example, the electric field would be stronger at the narrower part of the lateral wire apparatus. One embodiment includes the micrometer actuator connected to the hinge point of the hinge structure, which allows the movement from Da to Db to be more precisely controlled. However, in some instances, it may desirable to intentionally vary the spacing between the two wires 608 by moving only one of the connectors 802. The result would be a controlled gradient of known pitch that may be useful to determine threshold voltage for particle migration. For example, if the gap 504 spacing varied from 100 to 150 microns, and an electric field of 100V is applied between the two wires 608, one would have a controlled gradient across the two wires 608 ranging from 1V/µm at one end of the gap 504 to 0.8V/µm at the center point of the gap 504 to 0.67V/um. Particles with a high mobility would be seen to migrate at the wide end of the gap 504 (low field region) (0.67V/um) whereas particles with a low mobility would be seen to migrate only at the narrow end of the gap 504 (high field region) (1V/um).

The lateral wire apparatus 500 of FIG. 5 may be used to test or investigate the mobility of electrophoretic inks, such as electrophoretic inks. FIGS. 9A and 9B illustrate the behavior of experimental electrophoretic inks with the lateral wire apparatus as seen under a microscope. FIG. 9A shows the phenomena of convection currents due to hydrodynamic effects, while FIG. 9B shows particle agglomeration and chain formation. Without the lateral wire apparatus, these effects would not be seen in the top-viewing parallel plate configuration of the related art (see FIG. 1).

FIG. 9A illustrates a side view of electrophoretic ink in the lateral wire apparatus 500 of FIG. 5 showing convection or turbulence due to hydrodynamic effects. FIG. 9A is a still frame of moving ink particles. The particles are charging erratically, swirling, rotating and spinning around, which is not desirable. That ink in FIG. 9A is not very good is detectable using the lateral wire apparatus, while it is not detectable in the top-viewing parallel plate configuration of the related art (FIG. 1).

FIG. 9B illustrates a side view of electrophoretic ink in lateral wire apparatus 500 of FIG. 5 showing particle chain formation (agglomeration) convection currents. The wires at the top and bottom of the gap are the substantially parallel lines from left to right. The bubbles and other disturbances may be specks of dust and the like. As a voltage is applied, the particles are moving and the polarity is switched between positive and negative causing the ink particles to move across the gap. FIG. 9B illustrates electrophoretic migration for an experimental electrophoretic ink as may be seen using a microscope. In FIG. 9B, bits of green toner particles are adhering to one another in vertical string-like configurations, which is a sign that there may be some undesirable conductivity in the ink. It is a sign of agglomeration, which is undesirable. Without the side view provided by the lateral wire apparatus, all the viewer would see would be a band of red toner particles along the top wire and the viewer would mistakenly believe that this ink is fine. Thus, the lateral wire apparatus saves time so that no time is wasted on electrophoretic inks that are not working properly. Inks having undesirable characteristics may be detected early. Some characteristics that may be observed include color space, reflectivity, optical density, how a device or ink performs over time and the like. Characteristics may be measured by looking at a patch of ink or a flat area of ink under a glass electrode as the ink switches back and forth undergoing electrophoretic migration.

Exemplary embodiments include an apparatus for characterization of electrophoretic ink particle motion by viewing the lateral motion of particles, allowing a more detailed view of particle behavior underneath the topmost layer of particles. Exemplary embodiments also include a tool for creating the lateral wire apparatus with uniform wire spacing in an inexpensive and reproducible manner. The apparatus is not limited to any particular kind of electrophoretic ink and other inks may be used as well. Electrophoretic inks may be based on liquid toner technology in which pigment polymer and resin are ground to make fine particles in a liquid vehicle. The wire may be coated with various films to monitor the effect of surface coatings on particle mobility. The apparatus enables the characterization for electrophoretic inks and helps in detecting the failure modes of electrophoretic inks and permits more robust design of electrophoretic inks. Exemplary embodiments of the lateral wire apparatus are fast and easy to create and accurate in controlling the gap.

## Claims

1. A lateral wire apparatus for observing electrophoretic ink, comprising:
a first wire;
a second wire; and
a substrate having the first and second wires adhered thereon so that the first wire and the second wire are substantially parallel, forming a gap between the first wire and the second wire for receiving the electrophoretic ink.

2. The lateral wire apparatus of claim 1, further comprising:
a power supply attached to the first and second wires.

3. The lateral wire apparatus of claim 2, wherein a substantially uniform electric field is created in the gap between the first wire and the second wire.

4. The lateral wire apparatus of claim 1, wherein particle agglomeration is detectable in the electrophoretic ink.

5. The lateral wire apparatus of claim 1, wherein hydrodynamic effects are detectable in the electrophoretic ink.

6. The lateral wire apparatus of claim 1, wherein a distance between the first wire and the second wire is between about 30-60 µm.

7. A tool for making a lateral wire apparatus for observing electrophoretic inks, comprising:
a block having a plurality of fasteners mounted thereon;
a first wire and a second wire each wrapped around the plurality of fasteners; and
a substrate capable of being placed under the first wire and the second wire, the first wire and the second wire adhered to the substrate so that the first wire and the second wire are substantially parallel, forming a gap between the first wire and the second wire for receiving the electrophoretic ink.

8. A method of making a lateral wire apparatus for observing electrophoretic ink, comprising:
wrapping a first wire and a second wire around a plurality of fasteners mounted on a block;
placing a substrate under the first wire and the second wire;
adhering the first wire and the second wire to the substrate so that the first wire and the second wire are substantially parallel, the first wire and the second wire defining a gap for receiving electrophoretic ink; and
cutting the two wires so as to free the first and second wires and substrate adhered thereto from the block.

9. The method of claim 14, wherein particle agglomeration is detectable in the electrophoretic ink.

10. A method for using a lateral wire apparatus for observing ink, comprising:
disposing at least one drop of electrophoretic ink into a gap formed between a first wire and a second wire adhered to a substrate, the first wire and the second wire being substantially parallel; and
observing a lateral motion of particles of the electrophoretic ink undergoing electrophoretic migration between the first wire and the second wire.
